# EUROPÄISCHE PATENTANMELDUNG

(11) **EP 3 626 405 A1**
(43) Veröffentlichungstag der Anmeldung: **25.03.2020**
(21) Anmeldenummer: 19197431.0
(22) Anmeldetag: 16.09.2019
(51) Int. Cl.: B25J 5/02, B25J 9/02, B25J 9/04, B25J 11/00, B25J 19/02

(54) **SYSTEM UND VORRICHTUNG ZUR BEARBEITUNG VON FLÄCHEN VON GEBÄUDEN**

(30) Priorität: 24.09.2018 DE 102018123416
(71) Anmelder: Spitzley, Dinah Isabel, 88045 Friedrichshafen (DE)
(72) Erfinder: Schäfer, Stephan, 10407 Berlin (DE); Schöttke, Dirk, 12487 Berlin (DE); Tiedt, Patrick, 13055 Berlin (DE); Spitzley, Joachim, 10117 Berlin (DE)
(74) Vertreter: ETL Wablat & Kollegen Patent- und Rechtsanwaltsgesellschaft mbH

(57) **Zusammenfassung**

Ein System zur Bearbeitung von Flächen (11,12,13) von Gebäuden mit einer Vorrichtung (14) weist ein mobiles Gestell (15) auf, mit dem ein Bearbeitungskopf (34), der beispielsweise eine Sprühdüse zum Farbspritzen tragen kann, programmgesteuert entlang Wand- und Deckenflächen geführt werden kann. Die Programmsteuerung wird von unterschiedlichen Eingaben, wie Gebäudedaten, Eigenschaften des Bearbeitungsmaterials, Kameras und AbstandsSensoren (41) gespeist und ermöglicht es, zahlreiche hydraulische oder motorische Antriebe so koordiniert zu steuern, das der ideale Bearbeitungsablauf ausgeführt wird. Das System ermöglicht es also, weit gehend autonom ein Feld zu bearbeiten, das dem Gestell (15) gegenüberliegt. Danach kann das Gestell manuell oder auch programmgesteuert autonom in eine neue Position gebracht werden.

## Beschreibung

### Anwendungsgebiet und Stand der Technik

Die Erfindung betrifft ein System und eine Vorrichtung zur Bearbeitung von Flächen von Gebäuden. Die Bearbeitung von Wand-, Boden- und Deckenflächen an Gebäuden, wie zum Beispiel Malerarbeiten, wird bisher manuell durch Streichen, Rollen oder Spritzen ausgeführt. Diese Arbeit ist körperlich anstrengend, oft schmutzig und auch nicht ganz ungefährlich.

### Aufgabe und Lösung

Die Erfindung hat es sich zur Aufgabe gemacht, hier Abhilfe zu schaffen, so dass sich der Handwerker auf weniger gleichförmige Tätigkeiten, wie Auswahl, Beratung, Organisation etc. konzentrieren kann.

Die Erfindung schlägt daher ein System zur Bearbeitung von Flächen von Gebäuden mit einer Vorrichtung vor, die ein mobiles Gestell enthält, an dem wenigstens ein Bearbeitungskopf angeordnet und programmgesteuert entlang den Flächen bewegbar ist.

Zum Farbauftrag auf die Wand-und Deckenflächen eines Raumes ist das Gestell in den Raum zu bringen. Die Vorrichtung ist dabei vorzugsweise bodengestützt verfahrbar, und zwar sowohl manuell als auch programmgesteuert angetrieben. Bei einem Anstrich in einem Neubau ist dann z.B. in dem Gestell als Bearbeitungskopf eine Farbsprühdüse, die meist über eine dezentrale Anlage mit Farbbehälter und Druckpumpe versorgt wird, vorgesehen. Eine Datenverarbeitungseinrichtung zur Programmsteuerung kann in dem Gestell selbst oder auch dezentral angeordnet sein. Sie steuert die Bewegung für den Bearbeitungskopf in Abhängigkeit von einem vorgegebenen Programmablauf, beispielsweise zuerst zur Bearbeitung der Decke und danach der Wände streifenförmig von oben nach unten.

Dabei wird entweder mechanisch durch Abstandhalter oder durch Abstandsfühler ein vorgegebener, für den Spritzvorgang und in Abhängigkeit vom Bearbeitungsbahn Material, also dem Farbmaterial idealer Abstand eingehalten. Bei Renovierungsarbeiten kann dem Farbauftrag eine Reinigung der Flächen einschließlich eines Farbabtrags vorgeschaltet sein. Dazu kann der Bearbeitungskopf eine Sprühdüse für Reinigungsflüssigkeit und ggf. ein Werkzeug zur Farbablösung enthalten. Auch ein Nachrollen könnte mit einem geeigneten Werkzeug in Bearbeitungskopf durchgeführt werden, um einen Farbauftrag zu vergleichmäßigen. Für Natursteinflächen, zum Beispiel auch für Fassaden oder auch innere Natur-Beton-oder Backsteinflächen, könnte der Bearbeitungskopf eine Düse für Sandstrahlen enthalten.

Da es sich bei Decken und Wänden normalerweise um ebene Flächen handelt, reicht es für viele Bearbeitungsvorgänge aus, wenn der Bearbeitungskopf an dem Gestell programmgesteuert in wenigstens zwei Achsen bewegbar ist. Das Gestell kann also zwei i.w. zur zu bearbeitenden Fläche parallele Führungsbahnen aufweisen, auf denen eine den Bearbeitungskopf tragende Querführung läuft. Die Führungsbahnen können einen Rahmen bilden, der von einer Hubeinrichtung zur Höheneinstellung der Führungsbahnen bewegbar ist. Der gegebenenfalls durch eine ausfahrbare Stütze geführte und versteifte Rahmen kann um 90° in die Horizontale geschwenkt werden, um eine Raumdecke zu bearbeiten.

Für die Programmsteuerung ist eine Datenverarbeitungseinrichtung vorgesehen, die ausgehend von einem vorgegebenen Programm die Bewegung des Bearbeitungskopfes über die unterschiedlichen Bewegungs- und Hubeinrichtungen, beispielsweise Linearantriebe, Teleskopspindel-Hubsäulen etc. in zueinander koordinierter Weise steuert. Dabei werden Daten von unterschiedlichen Sensoren berücksichtigt, wie einer oder mehrerer Kameras, die die Flächenbegrenzung, also die Grenzlinien zwischen Decke und Wand bzw. Wand zu angrenzenden Wand, nicht zu bearbeitende Flächenabschnitte, wie Fenster, Heizkörpernischen etc. über eine Bildauswertungseinheit erkennen. Ein Abstandsfühler, beispielsweise auf Laserbasis, kann, in Abhängigkeit von den Eigenschaften des Farbsprühstrahls (Druck, Farbeigenschaften), den optimalen Abstand des Bearbeitungskopfes von der zu bearbeitenden Fläche einstellen und einhalten. Dazu sollte der Bearbeitungskopf an einem Bearbeitungskopf-Träger angebracht sein, der auf der Querführung angeordnet und vertikal zu dieser ausfahrbar ist. Der Bearbeitungskopf kann auf dem Träger schwenkbar angebracht sein, so dass er sowohl für besondere Bearbeitungs-Vorgänge unter einem nicht-rechten Winkel zur Wand eingestellt werden kann, oder, unter Verfahrung der Basis, auch zur Bearbeitung von Decken und Böden, z.B. zum Aufbringen einer Bodenbeschichtung, eingesetzt werden kann.

Die Daten für die zu bearbeitenden Flächen können allerdings auch manuell eingegeben werden oder, insbesondere im Fall von Neubauten, von denen exakt vermaßte Planungsunterlagen vorliegen, auch in Form von entsprechenden Daten eingegeben werden, wenigstens einen Sensor, der eine Kamera enthält, wenigstens einen Sensor, der einen Abstandsfühler enthält, wenigstens einen Positionsgeber für die Position des Bearbeitungskopfes, eine Eingabe für von der Bearbeitung auszunehmende Flächen oder deren Merkmale, einen Eingabeanschluss für Daten, die außerhalb des Gestells ermittelt und zur Programmierung der Datenverarbeitungseinrichtung vorgesehen sind, z.B. von einer externen Kamera und/oder einem Abstandsfühler, einen Eingabeanschluss für aufgrund von Planungsunterlagen ermittelten Daten, und/oder eine Einrichtung zum Ausgleich von Boden-Unebenheiten beim Verfahren des Gestells.

Das Gestell kann im einfachsten Falle nach der Bearbeitung eines Flächenabschnitts, der beispielsweise durch die Länge der Querführung vorgegeben ist, manuell auf seinem Fahrgestell einen Abschnitt weiter geschoben werden. Beim manuellen Verfahren des Gestells kann der Abstand von der zu bearbeitenden Fläche auch mechanisch durch Anschläge bzw. Abstandhalter eingehalten werden. Bevorzugt ist jedoch das Fahrgestell selbst auch programmgesteuert angetrieben, so dass dies automatisch erfolgen kann. Da der Boden, auf dem das Fahrgestell läuft, nicht immer ganz eben ist, sollte über die Datenverarbeitungseinrichtung auch eine Korrektur erfolgen, wenn die Ausrichtung des Gestells zur bearbeiteten Fläche sich ändert. Beim Fahrgestell kann es sich um Rollen, Räder oder auch ein raupenartiges Fahrgestell handeln, das nach der Bewegung des Gestells blockiert werden kann. Um einen noch sichereren Stand des Gestells während der Bearbeitung zu erhalten, kann das Fahrgestell gegenüber der es tragenden Basis einziehbar sein, so dass die Basis bzw. daran vorgesehene starre Stützen direkt auf dem Boden aufsitzt. Umgekehrt könnten die Stützen auch ausfahrbar sein.

Das System nach der Erfindung ermöglicht bei seiner Verwendung für Malerarbeiten an Gebäudeflächen eine besonders gleichmäßige Qualität des Farbauftrags, da sowohl die Auftragsstärke als auch Überlappungen auf das nötige Maß beschränkt sein können, was bei manuellem Auftrag kaum erreichbar ist. Damit wird auch der Materialverbrauch optimiert.
Es wird also ein System zur Bearbeitung von Flächen von Gebäuden mit einer Vorrichtung geschaffen, das ein mobiles Gestell aufweist, mit dem ein Bearbeitungskopf, der beispielsweise eine Sprühdüse zum Farbspritzen tragen kann, programmgesteuert entlang Wand- und Deckenflächen geführt werden kann. Die Programmsteuerung wird von unterschiedlichen Eingaben, wie Gebäudedaten, Eigenschaften des Bearbeitungsmaterials, Kameras und Abstands-Sensoren gespeist und ermöglicht es, zahlreiche hydraulische oder motorische Antriebe so koordiniert zu steuern, das der ideale Bearbeitungsablauf ausgeführt wird. Das System ermöglicht es also, weit gehend autonom ein Feld zu bearbeiten, das dem Gestell gegenüberliegt. Danach kann das Gestell manuell oder auch programmgesteuert autonom in eine neue Position gebracht werden.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Die Unterteilung der Anmeldung in einzelne Abschnitte sowie Zwischenüberschriften beschränken die unter diesen gemachten Aussagen nicht in ihrer Allgemeingültigkeit.

### Kurzbeschreibung der Zeichnungen

Ausführungsbeispiele der Erfindung sind in der Zeichnung, z.T. schematisch, dargestellt und werden im Folgenden näher erläutert. Es zeigen:
- Fig. 1: eine Ansicht einer Vorrichtung für ein System zur Bearbeitung von Gebäudeflächen,
- Fig. 2: eine Seitenansicht der Vorrichtung nach Fig.1,
- Fig. 3: eine Draufsicht auf die Vorrichtung nachFig.1,
- Fig. 4: eine Schrägansicht einer Vorrichtung für ein System zur Bearbeitung von Gebäudeflächen,
- Fig. 5: die Vorrichtung gemäß Fig. 4 in einer Position zur Über-Kopf-Bearbeitung von Decken,
- Fig. 6: eine Vorrichtung mit einem den Bearbeitungskopf tragenden und führenden Gelenkarm,

- Fig. 7 und 8: eine Front- und Seitenansicht einer manuell positionierbaren Vorrichtung zur Bearbeitung einer Wand und
- Fig. 9 und 10: eine Front- und Seitenansicht einer weiteren manuell positionierbaren Vorrichtung zur Wandbearbeitung.

### Detaillierte Beschreibung bevorzugter Ausführungsbeispiele

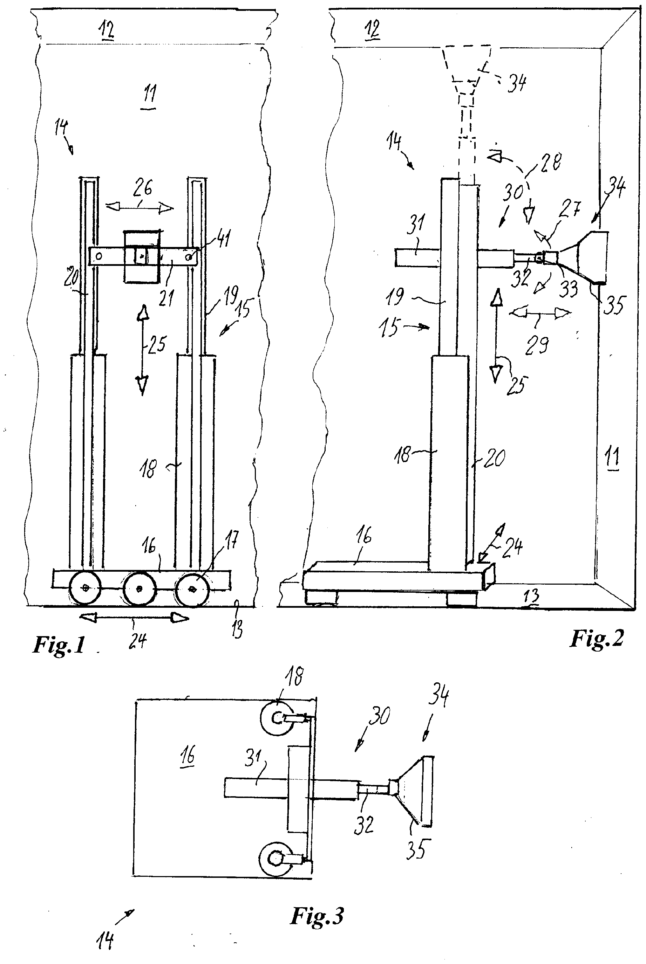

Fig. 1 bis 3 zeigen ein System zur Bearbeitung von Flächen in Gebäuden, wie Wänden 11, Decken 12 und Böden 13, das eine Vorrichtung 14 mit einem Gestell 15 aufweist, dass von einer Basis 16 sich nach oben erstreckt. Die Basis weist ein Fahrgestell 17 auf und ist auf diesem jedenfalls parallel zu einer zu bearbeitenden Wand 11 (siehe Pfeil 24), vorzugsweise jedoch allseitig verfahrbar. Von der Basis erstrecken sich an einer der Wand 11 zugewandten Seite zwei Hubeinrichtungen 18 in Form von Hubsäulen oder -zylindern, wie Teleskopspindel-Hubsäulen oder sonstigen Liniearantrieben aufwärts. An ihrem Hubstempel 19 sind Führungseinrichtungen 20 angebracht, die sich in Form von Führungsbahnen 22 von der Basis 16 vertikal aufwärts fast über die gesamte Höhe des Gestells 15 erstrecken.

Zwischen den beiden Führungseinrichtungen 20 verläuft eine Querführung 21, die an den Führungsbahnen 22 in vertikaler Richtung antreibbar geführt ist. Dazu können in den Führungsbahnen laufende, nicht dargestellte Gewindespindeln vorgesehen sein, die von einem ebenfalls nicht dargestellten Antrieb in bekannter Weise über Gewindemuttern die Querführung bewegen. An der Querführung 21 ist ein Bearbeitungskopf-Träger 30 längs der Querführung, also in horizontaler Richtung antreibbar geführt (siehe Pfeil 26). Der Bearbeitungskopf-Träger 30 enthält einen Liniearantrieb 31, der sich mit seinem Stempel 32 horizontal in Richtung der Wand 11 erstreckt und an seinem Ende, über ein Gelenk 33 schwenkbar angebracht, einen Bearbeitungskopf 34 trägt. An diesem können verschiedene Bearbeitungswerkzeuge angebracht werden, beispielsweise eine Farbsprühdüse zum Farbauftrag, eine Spritzdüse für Reinigungsflüssigkeit zur Vorbereitung der Wand für einen Farbauftrag und ggf. zum Farbabtrag, eine Strahldüse zum Partikelstrahlen oder auch mechanisch die Wand kontaktierende Werkzeuge. An den Bearbeitungskopf sind ferner Abschirmungen 35 nach Art von Scheuklappen, um Sprühnebel abzufangen und eine präzise Begrenzung des Sprühbereiches zu erzielen. Es kann dort auch eine Absaugung für Sprühnebel vorgesehen werden und, beispielsweise für Reinigungsbetrieb, eine Auffangschale. Der Übersichtlichkeit halber sind die Versorgungs- und Zuleitungseinrichtungen, also z.B. Farbbehälter, Druckpumpe, Material- und Energie- sowie Steuerleitungen nicht dargestellt. Der Bearbeitungskopf und die gesamte Steuerung kann sowohl von der Basis als auch extern über flexible Leitungen versorgt werden. Für die zahlreichen Bewegungselemente des Systems wäre auch ein Hydraulikantrieb möglich, jedoch ist ein elektrischer Antrieb über Liniearantriebe etc. einfacher, leichter und kostengünstiger herstellbar. Vorzugsweise sind alle zueinander bewegbaren Elemente, wie Hubeinrichtungen, Linearantriebe, Gelenke, das Fahrgestell, sowie die Bearbeitungswerkzeuge und Sensoren von Ausgangssignalen einer Datenverarbeitungseinrichtung gesteuert, die in der Vorrichtung, z.B. in der Basis, besser aber extern angeordnet sein kann und über Datenleitungen, wie einem BUS- System, ggf. auch kabellos, mit den Elementen verbunden ist.

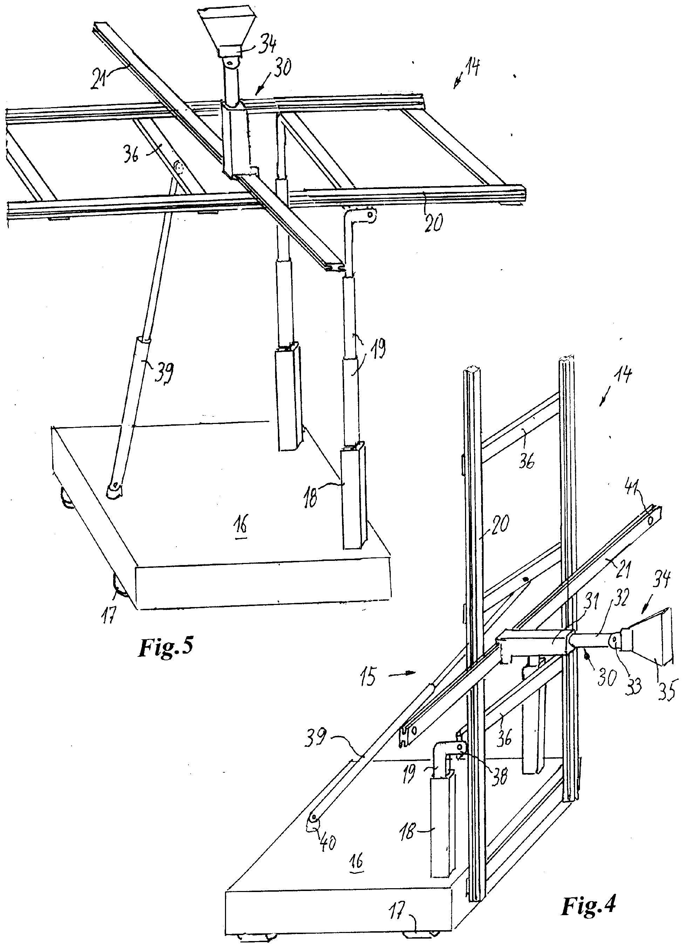

Die Fig. 4 und 5 zeigen ein Ausführungsbeispiel mit den Hauptmerkmalen der Version Fig. 1 bis 3, bei dem die Führungseinrichtungen 20 durch Querholme 36 einen Rahmen 37 bilden, der zu beiden Seiten an dem Hubstempel 19 der Hubeinrichtung 18 über ein Gelenk 38 schwenkbar angelenkt ist. Die Hubeinrichtung ist wiederum eine Teleskopspindel-Hubsäule, die mehrstufig ist, das heißt, dass sie bis auf das Vielfache ihrer Basislänge ausgefahren werden kann. Der Rahmen 37 mit den Führungseinrichtungen 20 wird von einer ausfahrbaren Stütze 39, die von der Basis 16 zu einem der Querholme 36 verläuft, abgestüzt und in der zur Bearbeitung einer senkrechten Wand vorgesehenen Stellung gemäß Fig. 4 in vertikaler Lage fixiert. Dazu ist die Stütze 39 an dem den Hubsäulen gegenüberliegenden Bereich der Basis 16 über ein Gelenk 40 gelagert. Die Querführung 21 ragt nach beiden Seiten über den Rahmen hinaus, so dass eine relativ große Breite der zu bearbeitenden Fläche von dem Bearbeitungskopf 34 bearbeitet werden kann.

Fig. 5 zeigt die Vorrichtung in einer Stellung zur Bearbeitung einer Raumdecke. Dazu wird durch Ausfahren der Hubeinrichtung 18 bei gleichzeitiger Betätigung des Antriebs in der Stütze 39 der Rahmen 37 in eine horizontale Lage mit dem vorgegebenen Abstand zwischen der Decke 12 und dem Bearbeitungskopf 34 gebracht, so dass nun auch die Querführung 21 horizontal verläuft und der Bearbeitungskopf 34 auf die Decke 12 gerichtet ist.

In einem Raum kann das System mit der mobilen Vorrichtung 14 nahezu selbstständig einen Farbauftrag auf Wände und Decken aufbringen. Zur Vorbereitung können, falls, zum Beispiel bei einem Neubau, von dem vermaaßte Planungsunterlagen vorhanden sind, diese Daten der zur Vorrichtung gehörenden Datenverarbeitungseinrichtung über eine entsprechende Dateneingabeeinrichtung eingegeben werden. Ferner kann der Raum über eine Vermessungseinheit mit Kamera und Abstandsmessung (Laser) rundum abgescannt werden, so dass Datensätze erzeugt werden, die Größe und Lage der zu bearbeitenden Flächen und der von der Bearbeitung auszunehmenden Flächenanteile, wie Fenster, Türen, Heizkörper und deren Nischen etc. abbilden. Zusammen mit den Positionsdaten der Vermessungseinheit sind damit die wesentlichsten Daten für die Steuerung der Vorrichtung zur Bearbeitung durch die Datenverarbeitungseinrichtung eingegeben. Zusätzlich können aber an der Vorrichtung, zum Beispiel an der Querführung 21 oder an dem Bearbeitungskopfträger 30, Sensoren, wie Kameras und/oder Abstandsfühler, vorgesehen sein, die über eine Bildauswertungseinheit der Datenverarbeitungseinrichtung durch Korrelation der ggf. stereoskopischen Kamerabilder und der Abstandsdaten eine detaillierte Steuerung der Vorrichtung 14 und vor allem des Bearbeitungskopfes 34 vornehmen, und auch die Qualität der Bearbeitung überwachen können.

Nach Vorbereitung des Raumes, z.B. durch Abkleben scharf begrenzter freizulassender Flächen, wie Türrahmen, Fensterrahmen etc. wird die Vorrichtung 14 über ihr Fahrgestell 17 in den Raum gefahren, wobei die Abmessungen vorzugsweise so sind, dass sie ohne wesentlichen Abbau von Elementen durch die meisten Türen passt. Dementsprechend sollten die Führungseinrichtungen 20 nur ca. 2 m lang sein und das größte Maß der Basis nicht wesentlich über 70 cm betragen. Um aber die volle Raumhöhe bearbeiten zu können, können die Führungseinrichtungen 20 mittels der Hubeinrichtung 18 hochgefahren werden. Die Vorrichtung 14 wird, im einfachsten Falle manuell, vorzugsweise aber programmgesteuert, parallel zur zu bearbeitenden Wand in eine Position an einer Raumecke gefahren und in dieser Position für die Bearbeitung gesichert, indem das Fahrgestell blockiert, eingefahren oder eine Bewegung durch das Ausfahren von Stützen verhindert wird.

Der Bearbeitungskopf 34 wird durch eine von der Datenverarbeitungseinrichtung koordinierte Betätigung der einzelnen Elemente z.B. in einer obere seitliche Lage und durch Betätigung des Liniearantriebs 31 auf den richtigen Abstand zur Wand 11 gefahren (siehe Pfeil 29) und beginnt mit der Bearbeitung, zum Beispiel durch Farbspritzen, normalerweise von oben nach unten. Dabei wird durch die Abschirmung eine gut begrenzte Bearbeitungsbahn erzeugt. Der Bearbeitungskopfträger 30 bleibt also in seiner Position auf der Querführung 21 und diese fährt auf den Führungseinrichtungen 20 nach unten, wobei diese Bewegung ggf. von einem Einziehen der Hubstempel 19 der Hubeinrichtung 18 ergänzt wird (Pfeil 25). Nach Bearbeitung einer Bahn der Bearbeitungsbreite des Bearbeitungskopfes 24 wird der Spritzvorgang unterbrochen und die Querführung 21 fährt wieder nach oben, der Bearbeitungskopfträger rückt um die Breite einer Bearbeitungsbahn weiter (siehe Pfeil 26) und die Bearbeitung wird fortgesetzt, bis die gesamte durch die Länge der Querführung 21 begrenzter Breite der Bearbeitung beendet ist. Danach wird das Fahrgestell 17 wieder freigegeben und die Vorrichtung 14 in Richtung des Pfeils 24, also parallel zur Wand in eine neue, anschließende Position gefahren, wo sich der Vorgang wiederholt.

Wenn auch die Decke bearbeitet werden soll, so kann bei der Ausführung nach Fig. 1 bis 3 der Bearbeitungskopfträger 30 mit dem Bearbeitungskopf 34 um 90° nach oben geschwenkt (siehe Pfeil 28) und über Hubsäule und Liniearantrieb in den richtigen Bearbeitungsabstand zur Decke bewegt werden. Über die Bewegung des Bearbeitungskopfträgers 30 auf der Querführung 21 wird eine Bahn der Decke bearbeitet. Dann kann über das Fahrgestell 17 die Vorrichtung 14 weiterrücken. Bei der Ausführung nach Fig. 4 bis 5 kann jedoch die gesamte durch die Breite der Querführung 21 und die Länge der Führungseinrichtungen 20 begrenzte Fläche der Decke ohne zwischenzeitliche Bewegung der Basis 16 bearbeitet werden.

Im Idealfall können sämtliche Bewegungen und Arbeitsabläufe, wie Beginn und Ende der jeweiligen Sprühvorgänge, durch die Dateneinrichtung koordiniert programmgesteuert, also im wesentlichen ohne manuellen Zugriff vorgenommen werden. Etwas problematischer wird eine Bearbeitung von Räumen, in denen viele Bearbeitungshindernisse vorhanden sind, wie nicht zu bewegendes Mobiliar, zum Beispiel bei Renovierungen. Auch von den Wänden abgerücktes und abgedecktes Mobiliar muss dann von der Vorrichtung umfahren werden und gegebenenfalls die Deckensbearbeitung durch die Ausladung der Querführung 21 ergänzt werden. Auch Hindernisse an der Decke, wie schlecht zu demontierende Deckenlampen, Kronleuchter etc. werden von den Sensoren 41 erfasst und bei der Bearbeitung berücksichtigt.

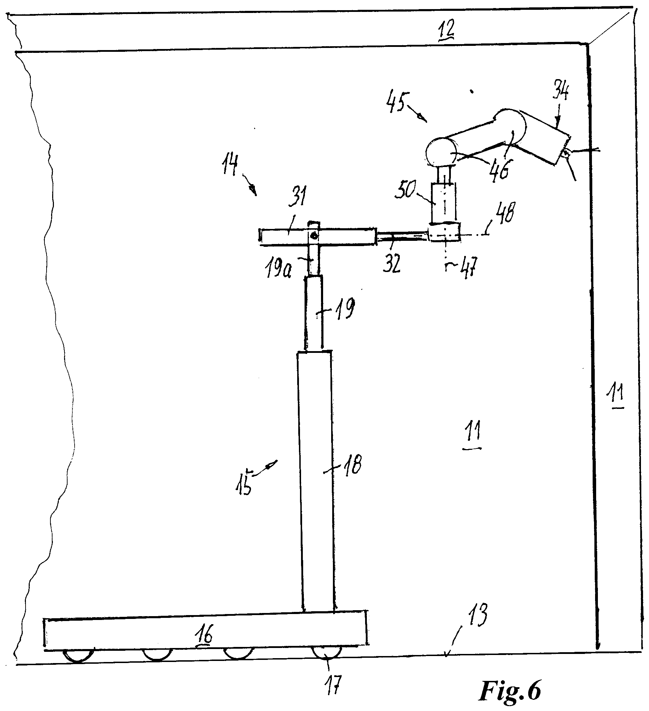

Fig. 6 zeigt eine Ausführung mit einer Gelenkarm-Anordnung 45. Der Bearbeitungskopf 34 ist dabei an der über angetrieben artikulierbare Gelenke 46 und um Achsen 47,48 schwenkbaren Gelenkarm-Anordnung 45 angeordnet, die mit einer ausfahrbare Einheit 50 ihrerseits an dem Stempel 32 eines Liniearantriebs 31 angeordnet ist. Dieser ist seinerseits an einem Teleskopstempel 19a der Hubeinrichtung 18 angebracht, die, wie auch bei den vorher beschriebenen Vorrichtungen, von einer Kante der Basis 16 aufragt. In der in Figur. 6 dargestellten Position könnte die Vorrichtung den oberen Teil der Wand 11 und die Decke 12 bearbeiten, wobei durch die koordinierte Bewegung der einzelnen Gelenke und Hubeinrichtung auch eine geradlinige Bewegungsbahn bei der Bearbeitung erzielt werden kann. Zur Bearbeitung des unteren Teils der Wand könnte die gesamte Gelenkarm-Anordnung 45 um die Achse 48 nach unten verschwenkt werden. Mit dem Ausfahren der Einheit 50 kann dann die gesamte Wand bearbeitet werden.

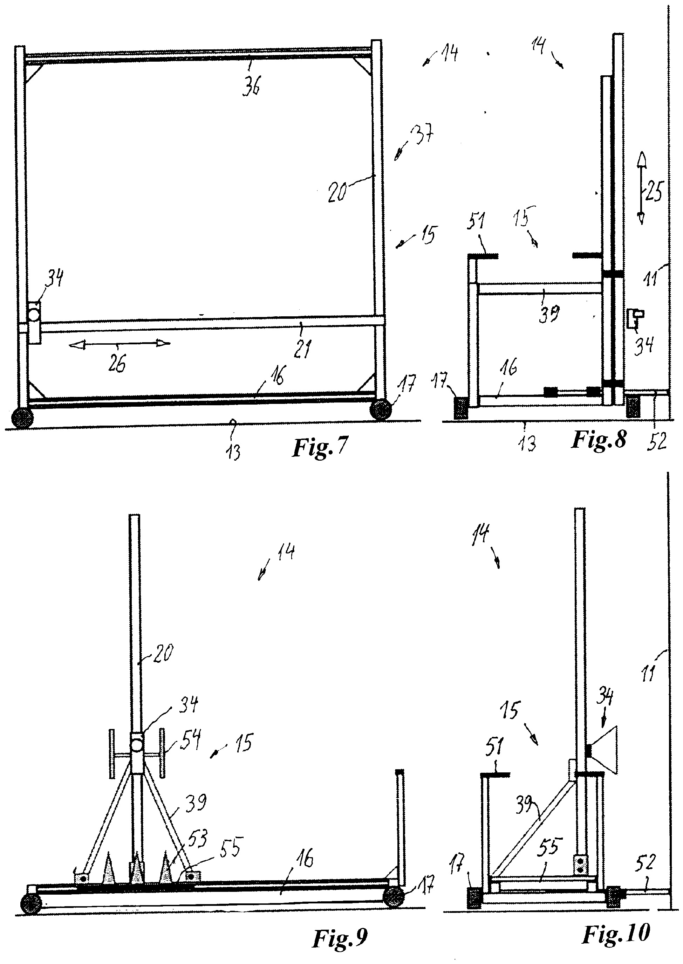

Die Fig. 7 und 8 zeigen eine Vorrichtung 14, deren Gestell 15 nach Art eines Rahmens 37 ausgebildet ist. Die seitlichen Rahmenschenkel werden von den Führungseinrichtungen 20 gebildet. Sie sind oben durch einen Querholm 36 verbunden, während unten die das Fahrgestell 17 tragende horizontal rahmenförmige Basis 16 die Verbindung zwischen den Führungseinrichtungen herstellt. Der Rahmen 37 wird durch Stützen 39 eines Stützrahmens versteift, an dem auch Handgriffe 51 für die manuelle Bewegung der Vorrichtung vorgesehen sind. An den Führungseinrichtungen 20 ist je eine Führungsbahn 22 höhenverstellbar (siehe Pfeil 25) geführt. An den Führungsbahnen 20 ist eine Querführung 21 in Form einer horizontal langgestreckten Führungsschiene geführt. Sie ist selbst auf den Führungsbahnen in vertikaler Richtung verfahrbar. Auf ihr ist der Bearbeitungskopf 34 horizontal antreibbar geführt.

Die Bearbeitung erfolgt wie vorher beschrieben. Die Querführung 21 wird in die der Raumhöhe angepasste höchste Stellung gefahren. Die Sprühdüse wird mit dem Bearbeitungsmaterial (Farbe) unter Druck beschickt und die Querführung 21 fährt abwärts, um einer Bearbeitungsbahn mit Farbe zu versehen. Dann wird die Beschickung der Sprühdüse unterbrochen, die Querführung fährt wieder nach oben und der Bearbeitungskopf 34 rückt um eine Bearbeitungs-Bahnbreite zur Seite. Dieser Bearbeitungsablauf wiederholt sich, bis die Wand 11 über die gesamte Breite des Rahmens 37 mit Farbe versehen ist. Danach wird die gesamte Vorrichtung um eine Rahmenbreite verschoben, damit sich der Bearbeitungsablauf wiederholt. Ein Abstandhalter 52 in Form eines Anschlagstiftes sorgt für den vorgegebenen Abstand des Bearbeitungskopfes 34 von der Wand 11.

Die Fig. 9 und 10 zeigen eine Ausführung, bei der auf der mit dem Fahrgestell 17 versehenen Basis 16 eine Schienenführung vorgesehen ist, auf der ein Schlitten 55 über die gesamte Länge der Basis verschiebbar geführt ist. Auf dem Schlitten ist, von Stützen 39 abgestüzt, nur eine Führungseinrichtung 20 senkrecht angeordnet, auf der der Bearbeitungskopf 34 höhenverstellbar ist. Zu beiden Seiten des Bearbeitungskopfes sind Sprühnebel-Absaugungen 54 vorgesehen. Auf dem Schlitten 55 befinden sich Führungen 53 für Versorgungsschläuche und -kabel, die, wie auch bei den vorher beschriebenen Ausführungen, sowohl den Bearbeitungskopf mit Material als auch die Antriebe für die Höhen- und Seitwärtsverstellungen der einzelnen Elemente in koordiniert programmierter Form von einer Datenverarbeitungseinrichtung aus versorgen. Die Ausführungen nach den Fig. 7 bis 10 kommen trotz großer Effizienz mit einem Minimum an motorischen Hub- und Stellantrieben aus und sind von einer Person ohne besondere Fachkenntnisse und ohne körperliche Anstrengung zu bedienen.

Die dargestellten Ausführungen des Systems sind Beispiele, die für zahlreiche Abwandlungen und Ausführungen im Rahmen der Erfindung stehen. Die Erfindung schafft ein automatisches mobiles Beschichtungs- und Abtragsystem für Wand-, Decken- und Bodenflächen im Innen- und Außenbereich, insbesondere für den Baubereich und Baustellenservice. Dabei kann das Einlesen von digitalisierten Bauplänen zur Steuerung im Raum Bestandteil der auszuführenden Arbeiten sein. Die dargestellte Säulenteleskop-Technologie auf selbstfahrender Lafette bzw. eine kartesische Teleskoptechnologie auf Rollwagen schafft eine relativ einfache, leichte und auch im rauhen Baustellenbetrieb zuverlässige Lösung. Bei sehr unebenem Untergrund könnte die Basis auch auf zum Beispiel rundum im Raum verlegten Schienen laufen. Auch eine Führung mit berührungsloser Technologie, zum Beispiel einer Induktionsschleife, ist möglich. Der Bearbeitungskopf könnte auch zugleich mehrere Werkzeuge aufnehmen, zum Beispiel eine Rolle zum Nachrollen des Farbauftrages, die anschließend an den Spritzvorgang, also oberhalb des Spritzbereiches läuft. Bei der Bearbeitung von Außenflächen, zum Beispiel Fassaden, könnten die Führungseinrichtungen in Form von Schienen auch temporär am Gebäude angebracht sein oder diese und/oder der Bearbeitungskopf von einem mobilen Gerät nach Art eines Hubwagens getragen sein.

Um auch bei und ebenem Untergrund eine den Gebäude-Flächenbegrenzungen folgende, also vertikale und horizontale Ausrichtung einhalten zu können, kann in der Vorrichtung ein ggf. von der Datenverarbeitungseinrichtung gesteuerter Niveauausgleich eingerichtet sein, bei dem das Fahrgestell oder die Basis tragende Stützen aufgrund eines Niveau-Sensors das gewünschte Niveau einhalten. Wichtig ist auch, dass das System sicherstellt, dass das Bearbeitungsgerät, also der Bearbeitungskopf, immer die richtige Ausrichtung und den richtigen Abstand zur bearbeiteten Fläche einhält. Dabei kann der Bearbeitungskopf auch, wenn es notwendig ist, von einer senkrecht auf die Fläche gerichteten Position ab geschwenkt werden, beispielsweise bei der Bearbeitung von Seitenflächen von Nischen o.dgl. (siehe Pfeil 27). Bei besonderen Aufgaben, die schwer durch Daten zu programmieren sind, könnte vorgesehen sein, dass eine Fachperson das Arbeitsgerät führt und die Datenverarbeitungseinrichtung die Bewegungen lernt und in seinem Programmablauf einbezieht. Die Bearbeitung eines Bodens, zum Beispiel Auftrag einer Kunststoffbeschichtung, kann auch von der Vorrichtung vorgenommen werden, indem die Basis jeweils rückwärts geführt wird.

Es wird jedenfalls mit dem System eine Möglichkeit geschaffen, Bearbeitungen wie Malerarbeiten von gleichförmigen und ermüdenden Arbeitsabläufen zu befreien und es so den Fachkräften zu ermöglichen, sich auf ihren Fachkenntnissen angemessene Arbeiten zu konzentrieren, wie beispielsweise Beratung, Materialauswahl etc.

**BEZUGSZEICHENLISTE**

| | |
|---|---|
| Wand | 11 |
| Decke | 12 |
| Boden | 13 |
| Vorrichtung | 14 |
| Gestell | 15 |
| Basis | |
| | |
| | 1 |
| | 6 |
| | |
| Fahrgestell | 17 |
| Hubeinrichtungen | 18 |
| Hubstempel | 19 |
| Führungseinrichtungen | 20 |
| Querführung | 21 |
| Führungsbahn | 22 |
| Pfeile | 24 bis 29 |
| Bearbeitungskopf-Träger | 30 |
| Linearantrieb | 31 |
| Stempel | 32 |
| Gelenk | 33 |
| Bearbeitungskopf | 34 |
| Abdeckungen | 35 |
| Querholm | 36 |
| Rahmen | 37 |
| Gelenk | 38 |
| Stütze | 39 |
| Gelenk | 40 |
| Sensor | 41 |
| Gelenkarm-Anordnung | 45 |
| Gelenk | 46 |
| Achsen | 47, 48 |
| ausfahrbare Einheit | 50 |
| Handgriffe | 51 |
| Abstandhalter | 52 |
| Schlauchführungen | 53 |
| Spulennebel-Absaugungen | 54 |

## Patentansprüche

1. System zur Bearbeitung von Flächen (11, 12, 13) an Gebäuden mit einer Vorrichtung (14), die ein mobiles Gestell (15) enthält, an dem wenigstens ein Bearbeitungskopf (34) angeordnet und programmgesteuert entlang den Flächen (11, 12, 13) bewegbar ist.

2. System nach Anspruch 1, **dadurch gekennzeichnet, dass** die Vorrichtung (14) bodengestützt verfahrbar ist.

3. System nach Anspruch 1 oder 2, **dadurch gekennzeichnet, dass** der Bearbeitungskopf (34) wenigstens eines der folgenden Merkmale aufweist:
3.1 wenigstens eine Sprühdüse zum Farbauftrag, insbesondere zum Farbspritzen,
3.2 eine Einrichtung zur Flächenreinigung bzw. zum Farbabtrag,
3.3 eine Einrichtung zur kontaktierenden Bearbeitung der Fläche z.B. zum Nachrollen eines Farbauftrag
3.4 eine Einrichtung zum Partikelstrahlen z.B. Sandstrahlen.

4. System nach einem der vorhergehenden Ansprüche, **dadurch gekennzeichnet, dass** der Bearbeitungskopf (34) an dem Gestell (15) programmgesteuert in wenigstens zwei Achsen bewegbar ist.

5. System nach einem der vorhergehenden Ansprüche, **dadurch gekennzeichnet, dass** das Gestell (15) programmgesteuert verfahrbar ist.

6. System nach einem der vorhergehenden Ansprüche, **dadurch gekennzeichnet, dass** zur Programmsteuerung eine Datenverarbeitungseinrichtung vorgesehen ist, die ein vorgegebenes Programm aufweist und an wenigstens eines der folgenden Aufnahmeeinrichtungen angeschlossen bzw. anschließbar ist:
6.1 wenigstens einen Sensor (41), der eine Kamera enthält,
6.2 wenigstens einen Sensor (41), der einen Abstandsfühler enthält,
6.3 wenigstens einen Positionsgeber für die Position des Bearbeitungskopfes (34),
6.4 eine Eingabe für von der Bearbeitung auszunehmende Flächen oder deren Merkmale,
6.5 einen Eingabeanschluss für Daten, die außerhalb des Gestells (15) ermittelt und zur Programmierung der Datenverarbeitungseinrichtung vorgesehen sind, z.B. von einer externen Kamera und/oder einem Abstandsfühler,
6.6 einen Eingabeanschluss für aufgrund von Planungsunterlagen ermittelten Daten,
6.7 eine Einrichtung zum Ausgleich von Boden-Unebenheiten beim Verfahren des Gestells (15).

7. System nach Anspruch 6, **dadurch gekennzeichnet, dass** die Datenverarbeitungseinrichtung eine Bildauswertungseinheit enthält.

8. System nach einem der vorhergehenden Ansprüche, **dadurch gekennzeichnet, dass** das Gestell (15) eine mit einem Fahrgestell (17) versehene Basis (16) und daran Führungseinrichtungen (20) aufweist, an denen der Bearbeitungskopf (34) zumindest in zwei Achsen bewegbar geführt ist.

9. System nach einem der vorhergehenden Ansprüche, **dadurch gekennzeichnet, dass** die Führungseinrichtungen (20) wenigstens eines der folgenden Merkmale aufweisen:
9.1 wenigstens zwei Führungsbahnen (22) mit einer Längsbetätigung für eine Querführung (21), die den Bearbeitungskopf (34) und ggf. Sensoren (41) trägt,
9.2 einen aus den Führungsbahnen (22) gebildeten Rahmen (37),
9.3 wenigstens eine Hubeinrichtung (18) zur Höhenverstellung der Führungsbahnen (22),
9.4 eine Einrichtung zum Verschwenkung der Führungsbahnen (22) aus einer vertikalen in eine horizontale Lage,
9.5 einen den Betätigungskopf (34) tragenden, mehrachsig verstellbar angetriebenen Gelenkarm (45).

10. System nach einem der vorhergehenden Ansprüche, **dadurch gekennzeichnet, dass** das Gestell (15) auf Führungslinien verfahrbar ist, die nach Art von Schienen am Boden verlegt sind oder nach Art einer Induktionsschleife das Verfahren des Gestells (15) steuern.

11. System nach einem der vorhergehenden Ansprüche, **dadurch gekennzeichnet, dass** an der Basis (16) ein Schlitten (55) horizontal verfahrbar geführt ist, auf den eine Führungseinrichtung (20) vertikal hoch stehend angeordnet ist, an der der Bearbeitungskopf (34) vertikal beweglich angeordnet ist.

12. Verfahren zur Bearbeitung von Flächen (11, 12, 13) an Gebäuden, bei dem an einem mobilen Gestell (15) ein von einer Datenverarbeitungseinrichtung gesteuerter Bearbeitungskopf (34) in von der Datenverarbeitungseinrichtung vorgegebenem Abstand, Richtung und Geschwindigkeit längs der Flächen geführt wird.

13. Verfahren nach Anspruch 12, **dadurch gekennzeichnet, dass** die Datenverarbeitungseinrichtung Ausgangssignale zur Steuerung des den Bearbeitungskopf (34) tragenden Gestells (15) zu dessen Bewegung auf einer Bodenfläche sowie zur koordinierten mehrachsigen Bewegung des Bearbeitungskopfes (34) sowie ggf. zu dessen Verschwenkung erzeugt.

14. Verfahren nach Anspruch 12, **dadurch gekennzeichnet, dass** die Datenverarbeitungseinrichtung die Ausgangssignale auf der Basis wenigstens einer der folgenden Daten erzeugt:
14.1 eines vorgegebenen Programms,
14.2 eines individuell eingegebenen Programms,
14.3 von Bilddaten,
14,4 von Daten wenigstens eines Sensors (41), der wenigstens eine Kamera und/oder einen Abstandsfühler aufweist,
14.5 von Positionsdaten des Bearbeitungskopfes,
14.5 von Daten des Bearbeitungsmaterials.
